# EUROPÄISCHE PATENTSCHRIFT

(11) **EP 1 987 316 B1**
(45) Veröffentlichungstag und Bekanntmachung des Hinweises auf die Patenterteilung: **06.12.2017**
(21) Anmeldenummer: 07711639.0
(22) Anmeldetag: 16.02.2007
(51) Int. Cl.: G01B 5/008, G01B 7/008

(54) **SICHERE ÜBERWACHUNG DER GESCHWINDIGKEIT BEI KOORDINATENMESSGERÄTEN**
RELIABLE MONITORING OF THE SPEED IN COORDINATE MEASURING APPLIANCES
SURVEILLANCE FIABLE DE LA VITESSE D'APPAREILS DE MESURE DE COORDONNEES

(30) Priorität: 24.02.2006 DE 102006009181
(43) Veröffentlichungstag der Anmeldung: 05.11.2008
(73) Patentinhaber: Carl Zeiss Industrielle Messtechnik GmbH, 73447 Oberkochen (DE)
(72) Erfinder: UHL, Peter, 73485 Unterschneidheim (DE); GRUPP, Günter, 89558 Böhmenkirch (DE); MAIER, Thomas, 73434 Aalen (DE)
(74) Vertreter: Brunotte, Joachim Wilhelm Eberhard
(86) Internationale Anmeldenummer: PCT/EP2007/001563
(87) Internationale Veröffentlichungsnummer: WO 2007/098886

(56) Entgegenhaltungen:
- DE-A1- 10 050 795
- DE-A1-102004 038 416
- US-A- 5 819 202
- US-A1- 2002 095 975

## Beschreibung

Die Erfindung betrifft ein Verfahren zum sicheren Überwachen einer Geschwindigkeit einer beweglichen Koordinatenmesseinrichtung und betrifft ein Koordinatenmessgerät mit einer solchen Koordinatenmesseinrichtung, insbesondere einem Messkopf. Die Koordinatenmesseinrichtung ist z. B. in mehreren Richtungen linear verfahrbar.

Derartige Koordinatenmessgeräte sind allgemein bekannt, z. B. aus US 2001/013177 A1. Die Erfindung ist jedoch nicht auf eine spezielle Art von Koordinatenmesseinrichtungen (z. B. tastender Messkopf vom schaltenden oder nicht schaltenden Typ) beschränkt.

Beim Vermessen der Koordinaten von Messobjekten mit verfahrbaren Koordinatenmesseinrichtungen sind besondere Vorsichtsmaßnahmen zu ergreifen. Zum einen soll das Messobjekt selbst vor mechanischen Beschädigungen geschützt werden, die beim Anschlagen der Koordinatenmesseinrichtung am Messobjekt entstehen könnten. Zum anderen sind auch Personen und Teile der Messanordnung selbst vor solchen mechanischen Beschädigungen zu schützen. Daher ist die Geschwindigkeit der Koordinatenmesseinrichtung auf sichere Weise, d.h. insbesondere sicher vor Fehlern, zu überwachen.

Unter einer Überwachung wird insbesondere ein Vorgang verstanden, der über die Feststellung der Geschwindigkeit und Nutzung dieser Informationen für den normalen Betrieb des Koordinatenmessgeräts hinausgeht. Es handelt sich daher in diesem Sinne nicht um eine Überwachung, wenn die Geschwindigkeit festgestellt wird (z. B. durch Auswertung des Tachosignals) und die Information über die festgestellte Geschwindigkeit lediglich dafür verwendet wird (z. B. durch Vergleich mit einem Geschwindigkeitssollwert) die Geschwindigkeit einzustellen oder zu regeln. Vielmehr wird unter einer Überwachung verstanden, dass die Feststellung der Geschwindigkeit und/oder der normale Betrieb des Koordinatenmessgeräts überwacht wird/werden. Zu dem normalen Betrieb des Koordinatenmessgeräts gehört insbesondere lediglich der Teil des Betriebes, der für die Ermittlung der Koordinaten erforderlich ist, nicht aber der Teil des Betriebes, der den Betrieb sicher macht in dem Sinne, wie es in der Beschreibungseinleitung beschrieben wurde. Unter einer Überwachung wird insbesondere auch verstanden, dass die festgestellten Geschwindigkeiten zu einer Sicherungsmaßnahme führen, die über den normalen Betrieb des Koordinatenmessgeräts hinausgeht. Die Sicherungsmaßnahme ist z. B. die Erzeugung eines Fehlersignals und/oder Wamsignals.

Die DE 199 37 737 A1 beschreibt eine Vorrichtung und ein Verfahren zum sicheren Überwachen der Drehbewegung einer Welle. In der Beschreibungseinleitung der Schrift wird ein so genannter Resolver als Drehbewegungssensor erwähnt. Bei dem Resolver handelt es sich um einen Drehtransformator, dessen Rotor mit der zu überwachenden Welle verbunden ist und dessen Stator zwei voneinander getrennte Wicklungen aufweist, die um einen Drehwinkel von 90° zueinander versetzt am Außenumfang der Welle angeordnet sind. Die beiden Statorwicklungen erhalten mittels der transformatorischen Kopplung ein Signal, das über die Rotorwicklung eingespeist wird. Die Signale am Ausgang der Statorwicklungen stellen ein erstes und ein zweites Signal dar, die jeweils den zeitlichen Verlauf der Drehwinkelposition eines ersten und eines zweiten Referenzpunktes der Welle repräsentieren.

In der DE 199 37 737 A1 wird vorgeschlagen, dass Auswertemittel einen Vergleicher beinhalten, mit dem Momentanwerte des ersten und zweiten Signals anhand einer vorgegebenen geometrischen Beziehung miteinander vergleichbar sind. Mit diesem Vergleicher wird unmittelbar nur die Winkelgeschwindigkeit bzw. die absolute Geschwindigkeit am Umfang der Welle überwacht.

In der Beschreibungseinleitung der Schrift wird ferner erwähnt, dass zusätzlich zu dem Resolver mindestens ein weiterer Drehbewegungssensor im Bereich der Welle angeordnet ist. Dies sei jedoch nur deshalb erforderlich, weil in den entsprechenden Anordnungen die Auswerteschaltungen nicht geeignet sind, auf Basis der Resolversignale eine sichere Überwachung von Drehbewegungen zu gewährleisten. Für die sichere Überwachung könnten sogar zwei voneinander getrennte Drehbewegungssensoren, beispielsweise Inkrementalgeber, verwendet werden. Diese dienten in der Regel allein der sicheren Überwachung der Drehbewegung der Welle. Der Resolver könne dagegen verwendet werden, um die Drehbewegung der Welle im Normalbetrieb zu regeln.

Die Kosten und der technische Aufwand für zusätzliche Bewegungssensoren sind hoch. Insbesondere müssen die Bewegungssensoren und die damit kombinierte Auswertungseinrichtung in jeglichen denkbaren Betriebssituationen zuverlässig und genau funktionieren.

Aus US 2002/0095975 A1 ist ein System zum Reduzieren der Auswirkungen von beschleunigungsinduzierten Ablenkungen auf Messungen bekannt, die von einer Maschine mit einem Messkopf vorgenommen werden. Es werden Beschleunigungssignale abgeleitet, die Beschleunigungen von sich bewegenden Teilen der Maschine anzeigen. Weiterhin werden aus den Beschleunigungssignalen Geschwindigkeitssignale abgeleitet. Die Geschwindigkeitssignale werden in einer Geschwindigkeits-Rückkopplungs-Steuerungsschleife verwendet, um der Maschine Korrektursignale bereitzustellen. In einer konkreten Ausführungsform weist die Rückkopplungsschleife einen Tachogenerator auf, der die Motorgeschwindigkeit verfolgt und ein Motorgeschwindigkeitssignal zu einer Antriebssteuerung zurücksendet, was sicherstellt, dass der Motor in Übereinstimmung mit einem Geschwindigkeits-Anforderungssignal von einem Computer angetrieben wird.

Es ist eine Aufgabe der vorliegenden Erfindung, ein Koordinatenmessgerät und ein Verfahren zum sicheren Überwachen der Geschwindigkeit eines Koordinatenmesssystems anzugeben, die es ermöglichen, die Kosten und den technischen Aufwand der Überwachung zu reduzieren.

Die beigefügten Patentansprüche definieren den Schutzumfang.

Es wird vorgeschlagen, aus zwei verschiedenen, voneinander unabhängigen Signalquellen jeweils die Geschwindigkeit der Koordinatenmesseinrichtung zu berechnen und/oder zu ermitteln, wobei beide Signalquellen außerdem für den Betrieb des Koordinatenmessgerätes genutzt werden. Ein erster Wert der Geschwindigkeit wird insbesondere aus Messwerten des Koordinatenmesssystems berechnet. Für diesen Zweck weisen die Messwerte Informationen über Positionen der Koordinatenmesseinrichtung auf. Diese Informationen werden genutzt, um die Geschwindigkeit der Koordinatenmesseinrichtung zu berechnen, beispielsweise durch Ableitung der Position nach der Zeit.

Ein zweiter Wert der Geschwindigkeit wird insbesondere aus Messsignalen eines zusätzlichen (zusätzlich zu dem Koordinatenmesssystem vorhandenen) Bewegungssensors ermittelt. Die Messsignale des zusätzlichen Bewegungssensors werden außerdem bei der Regelung einer Antriebseinrichtung der Koordinatenmesseinrichtung verwendet. Beispielsweise kann, wie in DE 199 37 737 A1 beschrieben, ein Resolver oder ein Drehtransformator mit nur einem Signalgenerator als zusätzlicher Bewegungssensor verwendet werden.

Insbesondere wird ein Verfahren zum sicheren Überwachen einer Geschwindigkeit einer beweglichen Koordinatenmesseinrichtung vorgeschlagen, wobei die Koordinatenmesseinrichtung Teil eines Koordinatenmesssystems zur Bestimmung von Koordinaten von Messobjekten ist. Außerdem werden
(a) ein erster Wert der Geschwindigkeit aus Messwerten des Koordinatenmesssystems berechnet, wobei die Messwerte Informationen über Positionen der Koordinatenmesseinrichtung aufweisen und wobei die Messwerte außerdem zur Bestimmung der Koordinaten verwendet werden,
(b) ein zweiter Wert der Geschwindigkeit aus Messsignalen zumindest eines zusätzlichen Bewegungssensors ermittelt, wobei die Messsignale außerdem bei der Regelung einer Antriebseinrichtung der Koordinatenmesseinrichtung verwendet werden oder verwendet werden können, und
(c) ein Fehlersignal erzeugt, wenn der erste Wert und/oder der zweite Wert gemäß einem vordefinierten Kriterium voneinander, von einem Sollwert und/oder von einem Grenzwert abweichen.

Unter einer Koordinatenmesseinrichtung werden insbesondere alle beweglichen Teile des Koordinatenmesssystems verstanden, die zum Zweck der Bestimmung der Koordinaten des Messobjekts oder der Messobjekte bewegt werden. Bei einem Koordinatenmessgerät in Portalbauweise gehören dazu insbesondere der eigentliche Messkopf, aber auch die mit dem Messkopf mitbewegten Teile, nämlich z. B. die Brücke des Portals, ein relativ zu der Brücke beweglicher Schlitten und die Teile, die gemeinsam mit dem Messkopf relativ zu dem Schlitten beweglich sind. Daher können die verschiedenen Teile der Koordinatenmesseinrichtung unterschiedliche Geschwindigkeiten haben. Somit können dementsprechend verschiedene Geschwindigkeiten oder lediglich einzelne Teile der Koordinatenmesseinrichtung hinsichtlich ihrer Geschwindigkeit überwacht werden. Alternativ oder zusätzlich können z. B. verschiedene Geschwindigkeitskomponenten der Geschwindigkeit eines Teils oder der gesamten Einrichtung überwacht werden.

Unter einem Fehlersignal wird ein Signal verstanden, das bei Erfüllung des vordefinierten Kriteriums, d. h. bei Auftreten des Fehlers, automatisch erzeugt wird. Die Bedeutung und/oder Ursache des Fehlers kann dabei unterschiedlicher Art sein. Beispielsweise kann ein Fehler des zusätzlichen Bewegungssensors und/oder bei der Verarbeitung der von dem Bewegungssensor gelieferten Messsignale vorliegen. Insbesondere kann ein integrierter Schaltkreis ausgefallen sein. Es kann sich jedoch auch um einen Fehler einer Software handeln, die z. B. in bestimmten Betriebsituationen falsche Ergebnisse für den ersten oder zweiten Wert der Geschwindigkeit liefert. Das Fehlersignal kann z. B. zur Anzeige gebracht werden und/oder automatisch einen Eingriff in den Betrieb des Koordinatenmessgeräts auslösen. Z. B. kann es sich daher bei dem Fehlersignal um einen Abschaltsignal handeln. Aus Gründen des Gerätesschutzes und/oder des Personenschutzes ist es i. d. R. erforderlich, alle Antriebe der Koordinatenmesseinrichtung zu stoppen, wenn auch nur einer der auf verschiedene Weise ermittelten Geschwindigkeitswerte auf das Vorliegen eines Fehlers hindeutet.

Insbesondere können der erste Wert und der zweite Wert jeweils wiederholt aktualisiert werden und kann das vordefinierte Kriterium wiederholt jeweils auf die aktualisierten Werte angewendet werden.

Das vordefinierte Kriterium kann ebenfalls verschiedener Art sein. Weichen z. B. die beiden Werte zu einem bestimmten Zeitpunkt oder über einen definierten Zeitraum hinweg um mehr als einen vorgegebenen Grenzwert voneinander ab, kann das Fehlersignal erzeugt werden. In diesem Fall ist zu vermuten, dass eine der beiden Teil-Prozeduren (entweder zur Ermittlung des ersten Werts der Geschwindigkeit oder zur Ermittlung des zweiten Werts der Geschwindigkeit) fehlerhaft ist.

Es ist/wird ein Maximalwert der maximal zulässigen Geschwindigkeit vorgegeben. Beispielsweise wird der Maximalwert im Laufe der Zeit verändert, insbesondere abhängig von dem Betriebszustand, von Signalen/Zuständen von Schutzeinrichtungen wie z. B. Lichtschranken und/oder Trittmatten, von einer Sollwertvorgabe und/oder von dem örtlichen Bereich, in dem sich die Koordinatenmesseinrichtung befindet. Dabei kann es erlaubt sein, dass bei einer Reduktion des Maximalwerts für eine Übergangszeit noch der alte, höhere Maximalwert gilt, der auf Grund der Trägheit für die Abbremsung der Koordinatenmesseinrichtung benötigt wird. Ein Fehler liegt dann vor, wenn auch nur einer der ermittelten Geschwindigkeitswerte den Maximalwert erreicht oder überschreitet.

Vorzugsweise wird das Fehlersignal generiert, wenn einer der Geschwindigkeitswerte den Maximalwert kontinuierlich über ein Zeitintervall vorgegebener Länge hinweg erreicht und/oder überschreitet. Alternativ oder zusätzlich kann bei der Feststellung, ob der Maximalwert erreicht und/oder überschritten ist, jeweils ein geglätteter Geschwindigkeitswert verwendet werden, der durch Glättung von zeitlichen Schwankungen des zunächst ermittelten bzw. berechneten Wertes erhalten wird. In beiden Fällen kann hierdurch sichergestellt werden, dass eine sehr kurzzeitige (insbesondere durch einen vorübergehenden Messfehler verursachte) Überschreitung oder das sehr kurzzeitige Erreichen des Maximalwertes noch keine Auswirkungen auf den Betrieb des Koordinatenmessgeräts haben.

Ferner kann in das Kriterium auch ein Sollwert der Geschwindigkeit miteinbezogen werden, der z. B. von einem Steuerungs-Programm vorgegeben wird. Liegt der erste Wert der Geschwindigkeit oder der zweite Wert der Geschwindigkeit signifikant über dem Sollwert ist ebenfalls auf einen Fehler zu schließen. Bei fehlerfreiem Betrieb dient der zusätzliche Bewegungssensor der Antriebseinrichtung insbesondere dazu, die tatsächliche Geschwindigkeit auf den Sollwert zu regeln.

Alle in dieser Beschreibung auf "die Geschwindigkeit" bezogenen Aussagen und/oder Verfahrensmerkmale können jeweils separat für einzelne Geschwindigkeitskomponenten (z. B. in x-, y- und z-Richtung eines kartesischen Koordinatensystems) gelten. Insbesondere kann die sichere Überwachung der Geschwindigkeit jeweils separat und unabhängig voneinander für die verschiedenen Antriebseinrichtungen eines Koordinatenmesssystems bzw. Bewegungskomponenten (z. B. in x-, y- und z-Richtung des Koordinatensystems) ausgeführt sein, wobei jede der Antriebseinrichtungen die Bewegung der Koordinatenmesseinrichtung entlang einer von mehreren unabhängigen Koordinatenachsen steuert.

Vorzugsweise ist eine Mehrzahl von Elektromotoren vorgesehen, die gemeinsam die Gesamt-Bewegung der Koordinatenmesseinrichtung bewirken. Dabei sind die Bewegungen der Elektromotoren eindeutig Bewegungskomponenten der Bewegung der Koordinatenmesseinrichtung zugeordnet. Z. B. ist jeweils zumindest ein Elektromotor für eine Linearbewegung der Koordinatenmesseinrichtung vorgesehen, wobei jede der Linearbewegungen ausschließlich in einer von drei paarweise zueinander senkrecht stehenden Richtungen stattfinden kann. Im Ergebnis kann innerhalb eines erreichbaren Bewegungsbereichs somit jeder gewünschte Punkt auf direktem Weg angefahren werden. Insbesondere können die drei Geschwindigkeitskomponenten der drei Linearbewegungen überwacht werden. Dies schließt den Fall mit ein, dass zur Erzeugung zumindest einer der Bewegungskomponenten (z. B. einer der drei Linearbewegungen) mehr als ein Elektromotor verwendet wird. In diesem Fall kann die Geschwindigkeit der Elektromotoren für dieselbe Bewegungskomponente unabhängig voneinander überwacht werden, gemeinsam überwacht werden (beispielsweise durch Bildung eines Mittelwerts der Geschwindigkeiten) oder es wird nur einer der Elektromotoren überwacht.

Die eindeutige Zuordnung der Elektromotoren zu den Bewegungskomponenten schließt auch den Fall mit ein, dass die von den einzelnen Elektromotoren erzeugten Bewegungen kinematisch gekoppelt sind. In diesem Fall kann der zweite Wert der Geschwindigkeit aus Messsignalen einer Mehrzahl der zusätzlichen Bewegungssensoren ermittelt werden. Beispielsweise sind die Bewegungen eines ersten Elektromotors und eines zweiten Elektromotors derart kinematisch gekoppelt, dass die Bewegung des ersten Elektromotors nur mit einem Faktor kleiner als eins multipliziert zu der kombinierten Bewegung beiträgt, während die Bewegung des zweiten Elektromotors eins zu eins (oder alternativ mit einem anderen Faktor multipliziert) zu der kombinierten Bewegung beiträgt.

Die Bestimmung von Koordinaten in einem Koordinatensystem ist nicht auf kartesische Koordinaten beschränkt. Vielmehr können Koordinaten jeglicher Art bestimmt werden, beispielsweise Polarkoordinaten, Zylinderkoordinaten usw..

Unter einem Koordinatenmessgerät wird nicht nur ein Gerät verstanden, mit dem Koordinaten in einem Koordinatensystem bestimmt werden können, sondern auch ein Gerät, das die Überprüfung einer Position eines Messobjekts ermöglicht. Beispielsweise kann die Koordinatenmesseinrichtung einen mechanischen Sensor und/oder einen optischen Sensor aufweisen.

Ein wesentlicher Vorteil der Erfindung besteht darin, dass Signale aus dem normalen Betrieb des Koordinatenmessgerätes für die sichere Überwachung der Geschwindigkeit genutzt werden, wobei zumindest teilweise auch eine hochgenaue Auswertung dieser Signale mitgenutzt werden kann. So ist die Bestimmung der Koordinaten von Messobjekten bei Koordinatenmessgeräten in der Regel hochgenau. Daher kann auch ein genauer Geschwindigkeitswert ermittelt werden. Um die Genauigkeit bei der Berechnung der Geschwindigkeit zu erhöhen, kann das Koordinatenmessgerät einen hochgenauen Zeitsignalgenerator aufweisen, der die Zeitbasis für die Ableitung nach der Zeit liefert. Auch die bei modernen Koordinatenmessgeräten vorhandene Abtastrate bei der Erfassung der Messwerte für die Koordinatenbestimmung ist so hoch, dass auch die Geschwindigkeitsberechnung sehr genau ausgestaltet werden kann.

Zum Umfang der vorliegenden Erfindung gehört auch ein Koordinatenmessgerät, das Folgendes aufweist:
(a) ein Koordinatenmesssystem zur Bestimmung von Koordinaten von Messobjekten mit einer Koordinatenmesseinrichtung, insbesondere ein Messkopf, die angetrieben durch zumindest eine Antriebseinrichtung zumindest in einer Richtung verfahrbar ist,
(b) eine Auswertungseinrichtung des Koordinatenmesssystems, die ausgestaltet ist, aus Messwerten, die Informationen über Positionen der Koordinatenmesseinrichtung aufweisen, die Koordinaten zu bestimmen,
(c) eine Antriebs-Regelungseinrichtung mit einem Bewegungssensor, der Messsignale einer Bewegung der Koordinatenmesseinrichtung erzeugt, die von der Antriebs-Regelungseinrichtung zur Regelung der Antriebseinrichtung der Koordinatenmesseinrichtung verwendet werden,
(d) eine Überwachungseinrichtung zum sicheren Überwachen einer Geschwindigkeit der Koordinatenmesseinrichtung,
(e) eine erste Geschwindigkeits-Ermittlungseinrichtung der Überwachungseinrichtung, die mit dem Koordinatenmesssystem verbunden ist und ausgestaltet ist, einen ersten Wert der Geschwindigkeit aus Messwerten des Koordinatenmesssystems zu berechnen, und
(f) eine zweite Geschwindigkeits-Ermittlungseinrichtung der Überwachungseinrichtung, die mit dem Bewegungssensor verbunden ist und ausgestaltet ist, einen zweiten Wert der Geschwindigkeit aus den Messsignalen des zusätzlichen Bewegungssensors zu ermitteln.

Das Koordinatenmessgerät kann außerdem eine Einrichtung zum Feststellen eines Überstromes aufweisen, d. h. eines Stromes zum Versorgen der Antriebseinrichtung oder eines Teils der Antriebseinrichtung, der höher als ein erwarteter Wert oder Maximalwert ist. Falls der festgestellte Strom den erwarteten Wert oder den Maximalwert erreicht oder überschreitet, können ebenfalls geeignete Schutzmaßnahmen ergriffen werden (z. B. Abschalten des oder der Antriebe).

Bei der Überwachungseinrichtung kann es sich auch um einen Gegenstand oder um eine Anordnung handeln, die eine von dem Koordinatenmessgerät separate Einheit bildet. Beispielsweise kann ein vorhandenes Koordinatenmessgerät mit einer solchen Überwachungseinrichtung nachgerüstet werden.

Insbesondere kann die erste Geschwindigkeits-Ermittlungseinrichtung einen ersten Mikrocomputer aufweisen und kann die zweite Geschwindigkeits-Ermittlungseinrichtung einen zusätzlichen, zweiten Mikrocomputer aufweisen. Ferner können die erste Geschwindigkeits-Ermittlungseinrichtung und die zweite Geschwindigkeits-Ermittlungseinrichtung jeweils mit einer Abschalteinrichtung zum Abschalten einer Stromversorgung der Antriebseinrichtung verbunden sein. Durch die Nutzung von verschiedenen Mikrocomputern wird die Sicherheit der Überwachung weiter erhöht. Nicht nur werden verschiedene Messsignale zur Berechnung des ersten und des zweiten Wertes der Geschwindigkeit genutzt. Außerdem findet die Berechnung der Geschwindigkeitswerte bzw. Ermittlung der Geschwindigkeitswerte in verschiedenen Bauelementen statt.

Einer der beiden Mikrocomputer kann außerdem der Steuerung des Betriebs des Koordinatenmessgerätes dienen, insbesondere der erste Mikrocomputer. In der Praxis stellt dies eine mit geringem Zusatzaufwand zu realisierende Ausführungsform dar, weil der ohnehin vorhandene Steuerungsrechner lediglich so programmiert bzw. ausgestaltet werden muss, dass er aus den Koordinaten auch die Geschwindigkeit berechnet. Ferner muss lediglich ein zusätzlicher, zweiter Mikrocomputer vorgesehen werden oder ein solcher bereits vorhandener entsprechend ausgestaltet werden, um aus den von dem Bewegungssensor erzeugten Signalen den zweiten Wert der Geschwindigkeit zu berechnen.

Bezüglich weiterer Vorteile und weiterer möglicher Ausgestaltungen des Koordinatenmessgerätes wird auf die Beschreibung des erfindungsgemäßen Verfahrens verwiesen.

Ausführungsbeispiele der Erfindung werden nun unter Bezugnahme auf die beigefügte Zeichnung beschrieben. Die einzelnen Figuren der Zeichnung zeigen:
- Figur 1: ein Koordinatenmessgerät in Portalbauweise,
- Figur 2: schematisch eine Anordnung, die Baugruppen zur Verarbeitung von Signalen beim Betrieb eines Koordinatenmessgeräts aufweist,
- Figur 3: schematisch eine Anordnung mit einer Leistungsstufe (Endstufe), von der ein Elektromotor mit Motorstrom versorgt wird, und
- Figur 4: schematisch eine Anordnung mit einem Computer und zumindest einem Mikrocontroller.

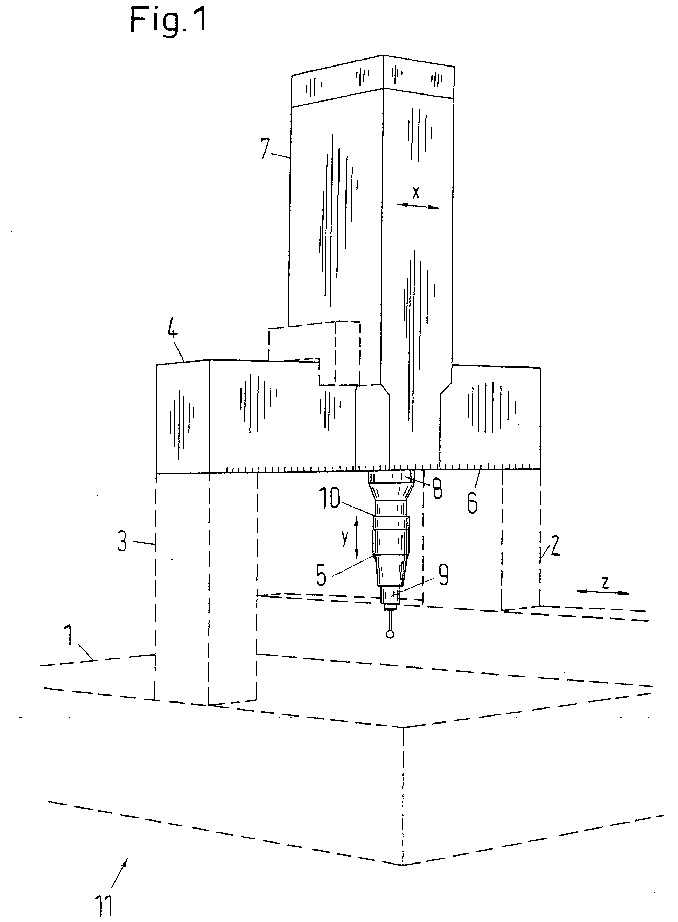

Das in Fig. 1 dargestellte Koordinatenmessgerät (KMG) 11 in Portalbauweise weist einen Messtisch 1 auf, über dem Säulen 2, 3 in Z-Richtung eines kartesischen Koordinatensystems beweglich angeordnet sind. Die Säulen 2, 3 bilden zusammen mit einem Querträger 4 ein Portal des KMG 11. Der Querträger 4 ist an seinen gegenüberliegenden Enden mit den Säulen 2 bzw. 3 verbunden. Nicht näher dargestellte Elektromotoren verursachen die Linearbewegung der Säulen 2, 3 in Z-Richtung. Dabei ist jeder der beiden Säulen 2, 3 ein Elektromotor zugeordnet.

Der Querträger 4 ist mit einem Querschlitten 7 kombiniert, welcher luftgelagert entlang dem Querträger 4 in X-Richtung des kartesischen Koordinatensystems beweglich ist. Die momentane Position des Querschlittens 7 relativ zu dem Querträger 4 kann anhand einer Maßstabsteilung 6 festgestellt werden. Die Bewegung des Querträgers 4 in X-Richtung wird durch einen weiteren Elektromotor angetrieben.

An dem Querschlitten 7 ist eine in vertikaler Richtung bewegliche Pinole 8 gelagert, die an ihrem unteren Ende über eine Montageeinrichtung 10 mit einer Koordinatenmesseinrichtung 5 verbunden ist. An der Koordinatenmesseinrichtung 5 ist ein Tastkopf 9 abnehmbar angeordnet. Die Koordinatenmesseinrichtung 5 kann angetrieben durch einen weiteren Elektromotor relativ zu dem Querschlitten 7 in Y-Richtung des kartesischen Koordinatensystems bewegt werden. Durch die insgesamt vier Elektromotoren kann der Tastkopf 9 daher zu jedem Punkt unterhalb des Querträgers 4 und oberhalb des Messtisches 1 verfahren werden, der in dem durch die Säulen 2, 3 definierten Zwischenraum liegt.

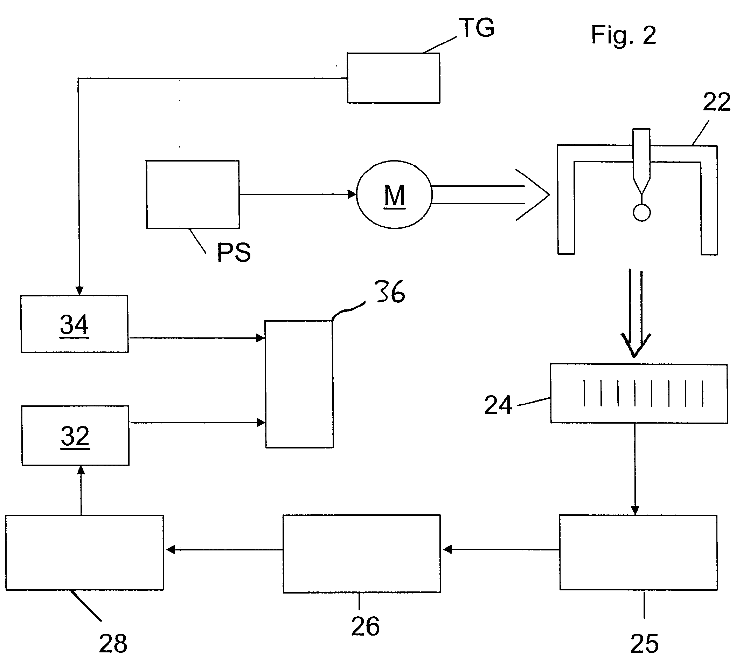

Fig. 2 zeigt schematisch eine Messeinrichtung 22, die bewegt werden kann, um durch Bestimmung einer Position der Messeinrichtung 22 (z.B. der Position eines Tastelementes) Koordinaten eines Messobjekts zu ermitteln. Die Messeinrichtung 22 ist im vorliegenden Ausführungsbeispiel bezüglich dreier, voneinander unabhängiger Linearachsen beweglich. Jede der drei Linearachsen weist einen Inkrementalmaßstab 24 auf. Die Bestimmung der Position der Messeinrichtung 22 bezüglich eines solchen Inkrementalmaßstabes ist an sich aus dem Stand der Technik bekannt (z. B. magnetische oder fotoelektrische Abtastung). Beispielsweise kann die Position wie in der DE 43 03 162 beschrieben unter Verwendung eines inkrementalen fotoelektrischen Messsystems ermittelt werden. Ein Messsystem, das ebenfalls im Rahmen der vorliegenden Erfindung zur Bestimmung der Koordinaten bzw. Positionen eingesetzt werden kann, ist in der WO 87/07944 beschrieben. Es kann ein interferentielles Messprinzip angewendet werden.

Mit dem Bezugszeichen 25 ist in Fig. 2 ein entsprechender Signalgeber bezeichnet, der gemäß der aktuellen Position der Messeinrichtung 22 unter Verwendung des Inkrementalmaßstabes 24 ein Positionssignal erzeugt, welches von einem nachgeschalteten Interpolator 26 weiter verarbeitet wird. Der Interpolator 26 liefert auch für Positionen zwischen den Markierungen des Inkrementalmaßstabes 24 gültige Werte, die von einer nachgeschalteten Koordinatenermittlungseinrichtung 28 verwertet werden können.

Die von der Koordinatenermittlungseinrichtung 28 ermittelten Koordinaten (die insbesondere in dem Koordinatensystem der Inkrementalmaßstäbe 24 definiert sind) werden einer ersten Ermittlungseinrichtung 32 zur Ermittlung der Geschwindigkeit der Messeinrichtung 22 zugeführt. Die Ermittlung der Geschwindigkeit erfolgt jeweils durch Bildung der zeitlichen Ableitung der einzelnen Koordinaten nach der Zeit.

Ferner kann die erste Ermittlungseinrichtung 32 (wie auch eine noch zu beschreibende zweite Ermittlungseinrichtung 34) ausgestaltet sein, gemäß dem vordefinierten Kriterium festzustellen, ob ein Fehler vorliegt bzw. ob das Kriterium erfüllt ist. Insbesondere kann festgestellt werden, ob einer der ermittelten Geschwindigkeitswerte zu hoch ist.

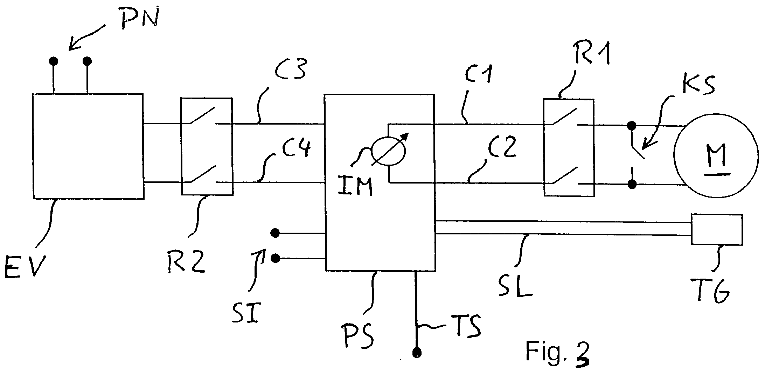

Außerdem zeigt Fig. 2 einen von mehreren Antriebsmotoren M, die die Messeinrichtung 22 bewegen. Zur Steuerung des Motors M ist eine Leistungsstufe PS vorgesehen. Ferner ist mit dem Motor M oder mit einer von dem Motor M angetriebenen Welle ein Tachogenerator TG kombiniert, der abhängig von der Drehgeschwindigkeit der Welle und damit abhängig von der Geschwindigkeit der von dem Motor M bewegten Messeinrichtung 22 ein Tachosignal liefert, das ein Maß für die Geschwindigkeit ist. Das Tachosignal wird einerseits der Leistungsstufe PS (die Regler wie einen Stromregler und einen Drehzahlregler aufweisen kann) zugeführt, um eine Regelung des Motorstroms gemäß einem der Leistungsstufe PS zugeführten Sollwert durchzuführen. Auf ein Ausführungsbeispiel der Motorregelung wird anhand von Fig. 3 noch eingegangen.

Die Sollgeschwindigkeit (jeweils separat bezüglich der drei Koordinatenachsen) kann aus Lagesollwerten bestimmt werden und zusätzlich aus Informationen darüber, mit welcher Geschwindigkeit die Messeinrichtung 22 in ihrer aktuellen Position verfahren werden soll. Ein Beispiel für die Nutzung von Lagesollwerten zur Steuerung eines Koordinatenmessgerätes ist aus der EP 084 965 4 bekannt.

Das Tachosignal oder ein davon abgeleitetes, weiterverarbeitetes Signal werden der zweiten Ermittlungseinrichtung 34 zugeführt, die daraus die Geschwindigkeit der Messeinrichtung 22 ermittelt. Dabei können z.B. auch verschiedene Getriebestufen eines in Fig. 2 nicht dargestellten, zwischen dem Motor M und der Messeinrichtung 22 angeordneten Getriebes berücksichtigt werden.

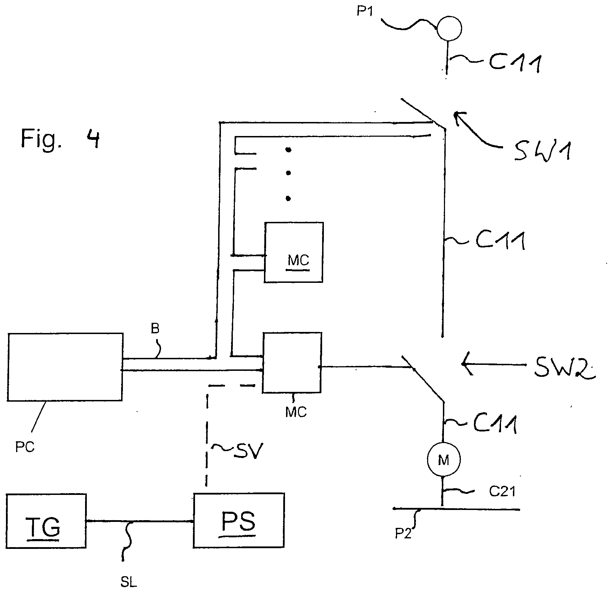

Erzeugt zumindest eine der Ermittlungseinrichtungen 32, 34 ein Fehlersignal, wird dieses einer Stelleinrichtung 36 zugeführt, die automatisch entsprechende Maßnahmen einleitet. Auf ein Ausführungsbeispiel für derartige Maßnahmen wird noch anhand von Fig. 4 eingegangen. Die Stelleinrichtung ist in diesem Ausführungsbeispiel ein Relais oder eine Kombination von Relais mit der zugehörigen Steuereinrichtung.

Die in Figur 3 dargestellte Anordnung lässt einige Details erkennen, wie einer der Elektromotoren M eines Koordinatenmessgeräts, z. B. des anhand von Figuren 1 und 2 beschriebenen Koordinatenmessgeräts, während des Betriebes mit Strom versorgt wird und gesteuert wird. Der Motor M ist in dem Ausführungsbeispiel über zwei elektrische Verbindungen C1, C2 mit einer Leistungsstufe PS verbunden. Die Leistungsstufe PS weist einen Signaleingang SI auf, über den sie z. B. von einem Computer oder von einem Mikrocontroller Steuersignale empfängt. Entsprechend den Steuersignalen stellt die Leistungsstufe PS den über die Leitungen C1, C2 fließenden Motorstrom ein.

Als Eingangsgrößen der Gesamt-Regelungseinrichtung können insbesondere die Sollposition und die Istposition und/oder die Sollgeschwindigkeit der Koordinatenmesseinrichtung dienen. Die Gesamt-Regelungseinrichtung kann außer der Endstufe weitere Regler aufweisen, z. B. Stromregler, Drehzahlregler und Lageregler.

Über einen Netzanschluss PN, der mit einem elektrischen Wechselspannungs-Energieversorgungsnetz verbunden werden kann, eine Energieversorgungseinheit EV, die beispielsweise einen Transformator und einen Gleichrichter aufweist, ein zweipoliges Relais R2 und über zwei elektrische Verbindungen, die die Energieversorgungseinheit EV über das Relais R2 mit der Leistungsstufe PS verbinden, kann die Leistungsstufe PS mit elektrischer Energie versorgt werden, die sie zur Speisung des Motorstroms benötigt.

Die Leistungsstufe PS weist eine Strommesseinrichtung IM auf oder ist mit einer solchen Strommesseinrichtung kombiniert, mit der der durch die elektrischen Verbindungen C1, C2 und durch den Motor M fließende Motorstrom gemessen werden kann. Ferner weist die Leistungsstufe PS ein in der Figur 2 nicht näher dargestelltes Stellglied zum Einstellen des Motorstroms auf.

Ferner ist ein Tachosignalgeber TG vorgesehen, der abhängig von der Bewegung des Elektromotors Tachosignale erzeugt und über eine Signalleitung SL an die Leistungsstufe PS überträgt. Bei dem Tachosignalgeber handelt es sich z. B. um einen Resolver oder um einen Drehtransformator mit nur einem Signalgenerator.

Während des Betriebes des Koordinatenmessgeräts stellt die Leistungsstufe PS somit entsprechend dem am Steuersignaleingang SI anliegenden Steuersignal (beispielsweise ein analoger Gleichspannungswert im Bereich -10V bis +10V) den Motorstrom in den elektrischen Verbindungen C1, C2 (Gleichstrom) ein und regelt die Geschwindigkeit auf den durch das Steuersignal vorgegebenen Wert, wobei die Leistungsstufe PS das von dem Tachosignalgeber erzeugte Tachosignal kontinuierlich oder quasi kontinuierlich auswertet.

Gemäß der hier beschriebenen bevorzugten Ausgestaltung der Erfindung weist die Leistungsstufe PS außerdem eine Signalausgang TS zur Übertragung des Tachosignals zu der Geschwindigkeits-Überwachungseinrichtung auf. Das Tachosignal kann jedoch auch direkt von dem Tachosignalgeber TG zu der Geschwindigkeits-Überwachungseinrichtung übertragen werden.

Wenn das Koordinatenmessgerät eine Mehrzahl von Motoren aufweist, ist vorzugsweise jeweils ein Exemplar der in Figur 2 dargestellten Anordnung für jeden der Elektromotoren vorgesehen. Dabei kann aber die Energieversorgungseinheit EV beispielsweise gemeinsam von allen Anordnungen genutzt werden.

Bevorzugtermaßen löst das von der Geschwindigkeits-Überwachung erzeugte Fehlersignal folgenden Prozess aus: Es wird schnellstmöglich ein Steuersignal an die Leistungsstufe PS ausgegeben, das die Leistungsstufe PS zur Umkehrung des Motorstroms veranlasst (d. h. ein Motorstrom, der den Motor aktiv bremst). Außerdem werden über nicht in Figur 3 dargestellte Steuerleitungen sowohl das Relais R1 als auch das Relais R2 angesteuert, um beide Relais R1, R2 zu öffnen. Wenn die beiden Relais geöffnet sind, ist sowohl die Stromversorgung der Leistungsstufe PS (über die elektrischen Verbindungen C3, C4) als auch die Motorstromleitung (elektrische Verbindungen C1, C2) unterbrochen. Außerdem wird vorzugsweise über einen Kurzschlussschalter KS (siehe Figur 2), der zwischen dem Relais R1 und dem Motor M angeordnet ist, ein Kurzschluss der beiden Motorstromanschlüsse bewirkt, an denen die elektrischen Verbindungen C1, C2 angeschlossen sind. Hierbei ist darauf zu achten, dass der Kurzschluss erst dann hergestellt wird, wenn das Relais R1 bereits geöffnet ist.

Figur 4 zeigt eine Anordnung, auf deren verschiedene mögliche Funktionsweisen später noch eingegangen wird. Die Anordnung zeigt einen Computer PC, der über einen Datenbus B verfügt oder an einen solchen Datenbus angeschlossen ist. Ferner sind mit dem Datenbus mehrere Mikrocontroller MC verbunden. In der Figur 4 sind zwei der Mikrocontroller MC dargestellt. Wie durch drei Punkte angedeutet ist, können jedoch noch mehr Mikrocontroller vorgesehen sein, vorzugsweise je ein Mikrocontroller für jeden zu überwachenden Elektromotor des Koordinatenmessgeräts. Alternativ kann aber auch derselbe Mikrocontroller für mehrere oder alle Elektromotoren vorgesehen sein.

Der untere der beiden dargestellten Mikrocontroller MC ist beispielsweise einem bestimmten Elektromotor M zugeordnet, wobei dieser Elektromotor M ebenfalls in Figur 4 dargestellt ist. Dieser Mikrocontroller MC ist über eine Signalverbindung SV mit einer Leistungsstufe PS verbunden, beispielsweise der in Figur 3 dargestellten Leistungsstufe PS. Ferner ist wiederum ein Tachosignalgeber TG vorgesehen, der über eine Signalleitung SL mit der Leistungsstufe PS verbunden ist und der ein Tachosignal gemäß der Bewegung des Elektromotors M erzeugt.

Außerdem ist in Figur 4 eine elektrische Leitung C11 erkennbar, die von einem Anschluss P1 auf einem ersten elektrischen Potential über zumindest einen ersten Schalter SW1 und zumindest einen zweiten Schalter SW2 zu dem Motor M führt und diesen während des Motorbetriebes mit Motorstrom versorgt. Eine entsprechende weitere elektrische Leitung C21 verbindet den Motor M mit einem zweiten elektrischen Potential (P2). Während des normalen Betriebes des Elektromotors M steuert die Leistungsstufe PS den Motorstrom durch die Leitungen C11, C21.

Wie ebenfalls aus Figur 4 erkennbar ist, ist der Computer PC, bei dem es sich beispielsweise um einen handelsüblichen Personalcomputer handeln kann, über den Datenbus B mit dem ersten Schalter SW1 verbunden. Zur Betätigung dieses Schalters können weitere Elemente vorgesehen sein, die ein entsprechendes Steuersignal des Computers PC, das über den Datenbus B übertragen wird, zur Betätigung des Schalters SW1 umwandeln. Im Ergebnis ist der Computer PC jedenfalls dazu in der Lage, den Schalter SW1 ein- und auszuschalten. Stellt nun der Computer PC während der Überwachung der Geschwindigkeit (auf eine Weise, die noch näher beschrieben wird) fest, dass der Motorstrom unterbrochen werden muss, schaltet der Computer PC den Schalter SW1 aus.

Außerdem ist der Mikrocontroller MC, der über die Signalverbindung SV mit der Leistungsstufe PS verbunden ist, in der Lage, den zweiten Schalter SW2 ein- und auszuschalten.

In Situationen, die noch näher erläutert werden, schaltet der Mikrocontroller den Schalter SW2 aus, um den Motorstrom durch den Motor M zu unterbrechen.

Allgemeiner formuliert und losgelöst von dem konkreten Ausführungsbeispiel gemäß Figur 4 sind vorzugsweise zumindest zwei verschiedene Steuereinrichtungen vorgesehen, die den Motorstrom unabhängig voneinander unterbrechen können. Hierdurch kann eine zusätzliche Sicherheit für den Betrieb des Elektromotors und der davon angetriebenen Achse des Koordinatenmessgeräts erzielt werden.

Die im Folgenden beschriebenen Ausführungsformen betreffen die Anordnung gemäß Fig. 4. Sowohl der Computer PC als auch der Mikrocontroller MC sind wie bereits anhand von Fig. 4 beschrieben in der Lage, beim Auftreten eines durch die Geschwindigkeits-Überwachung detektierten Fehlers "Notaus-Maßnahmen" zu ergreifen. Hierzu können beide Einrichtungen einzeln und unabhängig voneinander nicht nur den Motorstrom unterbrechen, sondern auch zusätzlich die anhand von Fig. 3 beschriebenen Maßnahmen ergreifen, nämlich den so genannten Zwischenkreis (elektrische Verbindungen C3, C4 in Fig. 2) unterbrechen und den Motor kurzschließen.

Der Computer PC und die Mikrocontroller MC verfügen somit jeweils über einen eigenen Abschaltpfad. Die Mikrocontroller MC entsprechen beispielsweise der in Fig. 2 dargestellten zweiten Ermittlungseinrichtung. Sie ermitteln den zweiten Wert der Geschwindigkeit aus dem Tachosignal der jeweiligen Linearachse bzw. Koordinatenachse des Koordinatensystems. Die erste Ermittlungseinrichtung 32 gemäß Fig. 2 kann durch den Computer PC realisiert sein, der somit den ersten Wert der Geschwindigkeit aus den Messwerten des Koordinatenmesssystems ermittelt. Die Mikrocontroller können auch als so genannte Slave-Mikrocontroller bezeichnet werden, da sie in der Hierarchie der Gesamtsteuerung des Koordinatenmessgerätes unter der Hierarchieebene des Computers PC stehen. Es können weitere Mikrocontroller im Rahmen des Koordinatenmesssystems vorgesehen sein, die jeweils einer Koordinatenachse zugeordnet sind und den Computer PC mit den Messwerten zur Koordinatenbestimmung versorgen.

Generell besteht bei der Erfindung jedoch auch die Möglichkeit, dass der erste Wert der Geschwindigkeit und der zweite Wert der Geschwindigkeit durch dieselbe Geschwindigkeits-Ermittlungseinrichtung ermittelt werden, beispielsweise durch den Computer. Die erste Ermittlungseinrichtung erfasst in diesem Fall auch das Tachosignal. Der oder die Mikrocontroller können dann weggelassen werden oder andere Aufgaben übernehmen, z. B. die Funktionstüchtigkeit des Computers zu überwachen.

## Patentansprüche

1. Verfahren zum sicheren Überwachen einer Geschwindigkeit einer beweglichen Koordinatenmesseinrichtung (22), wobei die Koordinatenmesseinrichtung (22) Teil eines Koordinatenmesssystems (22, 24, 25, 26, 28) zur Bestimmung von Koordinaten von Messobjekten ist, **dadurch gekennzeichnet, dass** zur sicheren Überwachung der Geschwindigkeit:
(a) ein erster Wert der Geschwindigkeit aus Messwerten des Koordinatenmesssystems (22, 24, 25, 26, 28) berechnet wird, wobei die Messwerte Informationen über Positionen der Koordinatenmesseinrichtung (22) aufweisen und wobei die Messwerte außerdem zur Bestimmung der Koordinaten verwendet werden,
(b) ein zweiter Wert der Geschwindigkeit aus Messsignalen zumindest eines zusätzlichen Bewegungssensors (TG) ermittelt wird, wobei die Messsignale außerdem bei der Regelung einer Antriebseinrichtung (M) der Koordinatenmesseinrichtung (22) verwendet werden oder verwendet werden können, und
(c) überwacht wird,
i. ob der erste Wert gemäß einem vordefinierten Kriterium einen vorgegebenen Maximalwert der Geschwindigkeit erreicht oder überschreitet,
ii. ob der zweite Wert gemäß einem vordefinierten Kriterium den vorgegebenen Maximalwert der Geschwindigkeit erreicht oder überschreitet,
und wenn bei der Überwachung gemäß i. und/oder gemäß ii. festgestellt wird, dass das vordefinierte Kriterium erfüllt ist, automatisch ein Fehlersignal erzeugt wird.

2. Verfahren nach dem vorhergehenden Anspruch, wobei der erste Wert und der zweite Wert jeweils wiederholt aktualisiert werden und das vordefinierte Kriterium wiederholt jeweils auf die aktualisierten Werte angewendet wird.

3. Verfahren nach dem vorhergehenden Anspruch, wobei geprüft wird, ob der erste Wert und/oder der zweite Wert größer als ein vordefinierter Maximalwert sind, und wobei der Maximalwert im Laufe der Zeit verändert wird.

4. Verfahren nach einem der vorhergehenden Ansprüche, wobei die Geschwindigkeit eine von anderen Geschwindigkeitskomponenten unabhängig ermittelbare Geschwindigkeitskomponente ist, insbesondere eine auf x-, y- und z-Richtung eines kartesischen Koordinatensystems bezogene Geschwindigkeitskomponente, und wobei mehrere oder alle Geschwindigkeitskomponenten gemäß einem der vorhergehenden Ansprüche überwacht werden.

5. Verfahren nach einem der vorhergehenden Ansprüche, wobei in Schritt (c) außerdem überwacht wird,
iii. ob der erste Wert und/oder der zweite Wert gemäß einem vordefinierten Kriterium von einem Sollwert abweicht/abweichen,
und wenn bei der Überwachung gemäß i., gemäß ii. und/oder gemäß iii. festgestellt wird, dass das vordefinierte Kriterium erfüllt ist, automatisch ein Fehlersignal erzeugt wird.

6. Koordinatenmessgerät (11), das Folgendes aufweist:
(a) ein Koordinatenmesssystem (22, 24, 25, 26, 28) zur Bestimmung von Koordinaten von Messobjekten mit einer Koordinatenmesseinrichtung (22), insbesondere mit einem Messkopf, die angetrieben durch zumindest eine Antriebseinrichtung (M) zumindest in einer Richtung verfahrbar ist,
(b) eine Auswertungseinrichtung (24, 25, 26, 28) des Koordinatenmesssystems (22, 24, 25, 26, 28), die ausgestaltet ist, aus Messwerten, die Informationen über Positionen der Koordinatenmesseinrichtung (22) aufweisen, die Koordinaten zu bestimmen,
(c) eine Antriebs-Regelungseinrichtung (PS, TG) mit einem zusätzlichen Bewegungssensor (TG), der Messsignale einer Bewegung der Koordinatenmesseinrichtung (22) erzeugt, die von der Antriebs-Regelungseinrichtung (PS, TG) zur Regelung der Antriebseinrichtung (M) der Koordinatenmesseinrichtung (22) verwendet werden,
(d) eine Überwachungseinrichtung (32, 34) zum sicheren Überwachen einer Geschwindigkeit der Koordinatenmesseinrichtung (22),
(e) eine erste Geschwindigkeits-Ermittlungseinrichtung (32) der Überwachungseinrichtung (32, 34), die mit dem Koordinatenmesssystem (22, 24, 25, 26, 28) verbunden ist und ausgestaltet ist, einen ersten Wert der Geschwindigkeit aus Messwerten des Koordinatenmesssystems (22) zu berechnen, und
(f) eine zweite Geschwindigkeits-Ermittlungseinrichtung (34) der Überwachungseinrichtung (32, 34), die mit dem Bewegungssensor verbunden ist und ausgestaltet ist, einen zweiten Wert der Geschwindigkeit aus den Messsignalen des zusätzlichen Bewegungssensors (TG) zu ermitteln,
wobei die Überwachungseinrichtung (32, 34) ausgestaltet ist zu überwachen,
i. ob der erste Wert gemäß einem vordefinierten Kriterium einen vorgegebenen Maximalwert der Geschwindigkeit erreicht oder überschreitet, und
ii. ob der zweite Wert gemäß einem vordefinierten Kriterium den vorgegebenen Maximalwert der Geschwindigkeit erreicht oder überschreitet,
und wenn sie bei der Überwachung gemäß i. und/oder gemäß ii. feststellt, dass das vordefinierte Kriterium erfüllt ist, automatisch ein Fehlersignal zu erzeugen.

7. Koordinatenmessgerät nach dem vorhergehenden Anspruch, wobei die erste Geschwindigkeits-Ermittlungseinrichtung (32) einen ersten Mikrocomputer aufweist, wobei die zweite Geschwindigkeits-Ermittlungseinrichtung (34) einen zusätzlichen, zweiten Mikrocomputer (MC) aufweist und wobei die erste Geschwindigkeits-Ermittlungseinrichtung (32) und die zweite Geschwindigkeits-Ermittlungseinrichtung (34) jeweils mit einer Abschalteinrichtung (SW1, SW2) zum Abschalten einer Stromversorgung der Antriebseinrichtung verbunden sind.

8. Koordinatenmessgerät nach Anspruch 6 oder 7, wobei die Überwachungseinrichtung (32, 34) ausgestaltet ist zu überwachen,
iii. ob der erste Wert und/oder der zweite Wert gemäß einem vordefinierten Kriterium von einem Sollwert abweicht/abweichen,
und wenn sie bei der Überwachung gemäß i., gemäß ii. und/oder gemäß iii. feststellt, dass das vordefinierte Kriterium erfüllt ist, automatisch ein Fehlersignal zu erzeugen.

## Claims

1. Method for reliably monitoring a speed of a movable coordinate measuring device (22), wherein the coordinate measuring device (22) is part of a coordinate measuring system (22, 24, 25, 26, 28) for determining coordinates of measured objects, **characterized in that** for reliably monitoring the speed:
(a) a first value of the speed is calculated from measured values of the coordinate measuring system (22, 24, 25, 26, 28), wherein the measured values have information about positions of the coordinate measuring device (22) and wherein the measured values are also used to determine the coordinates,
(b) a second value of the speed is determined from measurement signals of at least one additional movement sensor (TG), wherein the measurement signals are also used, or can be used, for controlling a drive device (M) of the coordinate measuring device (22), and
(c) it is monitored
i. whether the first value reaches or exceeds a predefined maximum value of the speed according to a predefined criterion, and
ii. whether the second value reaches or exceeds the predefined maximum value of the speed according to a predefined criterion,
and if it is determined during the monitoring according to i. and/or according to ii. that the predefined criterion is satisfied, a fault signal is automatically generated.

2. Method according to the preceding claim, wherein the first value and the second value are each updated repeatedly, and the predefined criterion is repeatedly applied to the updated values in each case.

3. Method according to the preceding claim, wherein checking is carried out to determine whether the first value and/or the second value are/is higher than a predefined maximum value, and wherein the maximum value is changed in the course of time.

4. Method according to one of the preceding claims, wherein the speed is a speed component which can be determined independently of other speed components, in particular a speed component which is referred to the x, y and z directions of a Cartesian coordinate system, and wherein a plurality of speed components, or all of the speed components, are monitored in accordance with one of the preceding claims.

5. Method according to one of the preceding claims, wherein in step c) it is also monitored
iii. whether the first value and/or the second value deviate/deviates from a setpoint value according to a predefined criterion,
and if it is determined during the monitoring according to i., according to ii. and/or according to iii. that the predefined criterion is satisfied, a fault signal is automatically generated.

6. Coordinate measuring appliance (11) which has the following:
(a) a coordinate measuring system (22, 24, 25, 26, 28) for determining coordinates of measured objects with a coordinate measuring device (22), in particular with a probe, which can be moved at least in one direction, driven by at least one drive device (M),
(b) an evaluation device (24, 25, 26, 28) of the coordinate measuring system (22, 24, 25, 26, 28) which is configured to determine the coordinates from measured values which have information about positions of the coordinate measuring device (22),
(c) a drive control device (PS, TG) with an additional movement sensor (TG) which generates measurement signals of a movement of the coordinate measuring device (22) which are used by the drive control device (PS, TG) to control the drive device (M) of the coordinate measuring device (22),
(d) a monitoring device (32, 34) for reliably monitoring the speed of the coordinate measuring device (22),
(e) a first speed determining device (32) of the monitoring device (32, 34) which is connected to the coordinate measuring system (22, 24, 25, 26, 28) and is configured to calculate a first value of the speed from measured values of the coordinate measuring system (22), and
(f) a second speed determining device (34) of the monitoring device (32, 34) which is connected to the movement sensor and is configured to determine a second value of the speed from the measurement signals of the additional movement sensor (TG),
wherein the monitoring device (32, 34) is configured to monitor
i. whether the first value reaches or exceeds a predefined maximum value of the speed according to a predefined criterion, and
ii. whether the second value reaches or exceeds the predefined maximum value of the speed according to a predefined criterion,
and to generate a fault signal automatically if said monitoring device (32, 34) determines during the monitoring according to i. and/or according to ii. that the predefined criterion is satisfied.

7. Coordinate measuring appliance according to the preceding claim, wherein the first speed determining device (32) has a first microcomputer, wherein the second speed determining device (34) has an additional, second microcomputer (MC), and wherein the first speed determining device (32) and the second speed determining device (34) are each connected to a switch-off device (SW1, SW2) for switching off a power supply of the drive device.

8. Coordinate measuring appliance according to Claim 6 or 7, wherein the monitoring device (32, 34) is configured to monitor
iii. whether the first value and/or the second value deviate/deviates from a setpoint value according to a predefined criterion,
and to generate a fault signal automatically if said monitoring device (32, 34) determines during the monitoring according to i., according to ii. and/or according to iii. that the predefined criterion is satisfied.

## Revendications

1. Procédé pour surveiller de manière sécurisée une vitesse d'un dispositif de mesure de coordonnées mobile (22), dans lequel le dispositif de mesure de coordonnées (22) fait partie d'un système de mesure de coordonnées (22, 24, 25, 26, 28) destiné à déterminer des coordonnées d'objets de mesure, **caractérisé en ce que**, pour surveiller la vitesse de manière sécurisée :
(a) une première valeur de la vitesse est calculée à partir de valeurs de mesure du système de mesure de coordonnées (22, 24, 25, 26, 28), dans lequel les valeurs de mesure comportent des informations concernant des positions du dispositif de mesure de coordonnées (22) et dans lequel les valeurs de mesure sont également utilisées pour déterminer les coordonnées,
(b) une deuxième valeur de la vitesse est déterminée à partir de signaux de mesure d'au moins un capteur de mouvement supplémentaire (TG), dans lequel les signaux de mesure sont ou peuvent également être utilisés lors de la régulation d'un dispositif d'entraînement (M) du dispositif de mesure de coordonnées (22), et
(c) une surveillance est effectuée pour déterminer
i. si la première valeur atteint ou dépasse une valeur maximale prédéterminée de la vitesse conformément à un critère prédéfini,
ii. si la deuxième valeur atteint ou dépasse la valeur maximale prédéterminée de la vitesse conformément à un critère prédéfini,
et un signal d'erreur est automatiquement généré lorsqu'il est établi que le critère prédéfini est satisfait lors de la surveillance effectuée conformément à i. et/ou conformément à ii.

2. Procédé selon la revendication précédente, dans lequel la première valeur et la deuxième valeur sont respectivement actualisées de manière répétée et le critère prédéfini est respectivement appliqué de manière répétée aux valeurs actualisées.

3. Procédé selon la revendication précédente, dans lequel il est testé si la première valeur et/ou la deuxième valeur est/sont supérieure(s) à une valeur maximale prédéfinie, et dans lequel la valeur maximale est modifiée au cours du temps.

4. Procédé selon l'une quelconque des revendications précédentes, dans lequel la vitesse est une composante de vitesse pouvant être déterminée indépendamment d'autres composantes de vitesse, notamment une composante de vitesse établie par rapport aux directions x, y et z d'un système de coordonnées cartésien, et dans lequel plusieurs ou la totalité des composantes de vitesse sont surveillées selon l'une quelconque des revendications précédentes.

5. Procédé selon l'une quelconque des revendications précédentes, dans lequel, lors de l'étape (c), une surveillance est également effectuée pour déterminer
iii. si la première valeur et/ou la deuxième valeur s'écarte/s'écartent d'une valeur de consigne conformément à un critère prédéfini,
et un signal d'erreur est automatiquement généré lorsqu'il est établi, lors de la surveillance effectuée conformément à i., conformément à ii. et/ou conformément à iii., que le critère prédéfini est satisfait.

6. Appareil de mesure de coordonnées (11) comprenant :
(a) un système de mesure de coordonnées (22, 24, 25, 26, 28) destiné à déterminer des coordonnées d'objets de mesure au moyen d'un dispositif de mesure de coordonnées (22), notamment au moyen d'une tête de mesure qui peut être déplacée au moins dans une direction en étant entraînée par au moins un dispositif d'entraînement (M),
(b) un dispositif d'évaluation (24, 25, 26, 28) du système de mesure de coordonnées (22, 24, 25, 26, 28), qui est conçu pour déterminer les coordonnées à partir de valeurs de mesure comportant des informations concernant des positions du dispositif de mesure de coordonnées (22),
(c) un dispositif de régulation de l'entraînement (PS, TG) comportant un capteur de mouvement supplémentaire (TG) générant des signaux de mesure d'un mouvement du dispositif de mesure de coordonnées (22) qui sont utilisés par le dispositif de régulation de l'entraînement (PS, TG) pour réguler le dispositif d'entraînement (M) du dispositif de mesure de coordonnées (22),
(d) un dispositif de surveillance (32, 34) destiné à surveiller de manière sécurisée une vitesse du dispositif de mesure de coordonnées (22),
(e) un premier dispositif de détermination de vitesse (32) du dispositif de surveillance (32, 34) qui est relié au système de mesure de coordonnées (22, 24, 25, 26, 28) et est conçu pour calculer une première valeur de la vitesse à partir de valeurs de mesure du système de mesure de coordonnées (22), et
(f) un deuxième dispositif de détermination de vitesse (34) du dispositif de surveillance (32, 34), qui est relié au capteur de mouvement et est conçu pour déterminer une deuxième valeur de la vitesse à partir des signaux de mesure du capteur de mouvement supplémentaire (TG),
dans lequel le dispositif de surveillance (32, 34) est conçu pour effectuer une surveillance afin de déterminer,
i. si la première valeur atteint ou dépasse une valeur maximale prédéterminée de la vitesse conformément à un critère prédéfini, et
ii. si la deuxième valeur atteint ou dépasse la valeur maximale prédéterminée de la vitesse conformément à un critère prédéfini,
et pour générer automatiquement un signal d'erreur lorsqu'il établit, lors de la surveillance effectuée conformément à i. et/ou conformément à ii., que le critère prédéfini est satisfait.

7. Appareil de mesure de coordonnées selon la revendication précédente, dans lequel le premier dispositif de détermination de vitesse (32) comporte un premier micro-ordinateur, dans lequel le deuxième dispositif de détermination de vitesse (34) comporte un deuxième micro-ordinateur supplémentaire (MC) et dans lequel le premier dispositif de détermination de vitesse (32) et le deuxième dispositif de détermination de vitesse (34) sont respectivement reliés à un coupe-circuit (SW1, SW2) destiné à interrompre une alimentation en tension du dispositif d'entraînement.

8. Appareil de mesure de coordonnées selon la revendication 6 ou 7, dans lequel le dispositif de surveillance (32, 34) est conçu pour effectuer une surveillance afin de déterminer
iii. si la première valeur et/ou la deuxième valeur s'écarte/s'écartent d'une valeur de consigne conformément à un critère prédéfini,
et pour générer automatiquement un signal d'erreur lorsqu'il établit, lors de la surveillance effectuée conformément à i., conformément à ii. et/ou conformément à iii., que le critère prédéfini est satisfait.
